# EUROPÄISCHE PATENTSCHRIFT

(11) **EP 3 287 925 B1**
(45) Veröffentlichungstag und Bekanntmachung des Hinweises auf die Patenterteilung: **05.06.2019**
(21) Anmeldenummer: 17185665.1
(22) Anmeldetag: 10.08.2017
(51) Int. Cl.: G06F 21/33, H04L 29/06, H04L 9/08, H04L 9/32

(54) **COMPUTERVORRICHTUNG ZUM ÜBERTRAGEN EINES ZERTIFIKATS AUF EIN GERÄT IN EINER ANLAGE**
COMPUTER DEVICE FOR TRANSFERRING A CERTIFICATE TO A DEVICE IN A SYSTEM
DISPOSITIF INFORMATIQUE PERMETTANT DE TRANSFÉRER UN CERTIFICAT À UN DISPOSITIF DANS UNE INSTALLATION

(30) Priorität: 26.08.2016 DE 102016216115
(43) Veröffentlichungstag der Anmeldung: 28.02.2018
(73) Patentinhaber: Siemens Schweiz AG, 8047 Zürich (CH)
(72) Erfinder: Brockhaus, Hendrik, 85579 Unterbiberg (DE); Bußer, Jens-Uwe, 85579 Neubiberg (DE); Gessner, Jürgen, 85661 Forstinning (DE)
(74) Vertreter: Maier, Daniel Oliver

(56) Entgegenhaltungen:
- US-A- 5 982 898
- US-A1- 2005 021 969
- US-A1- 2005 071 630
- US-A1- 2006 291 664
- US-A1- 2009 228 703
- US-A1- 2013 262 858

## Beschreibung

Die vorliegende Erfindung betrifft eine Computervorrichtung zum Übertragen eines Zertifikats auf ein Gerät in einer Anlage. Des Weiteren betrifft die vorliegende Erfindung ein System mit einer solchen Computervorrichtung. Darüber hinaus betrifft die vorliegende Erfindung ein Verfahren zum Übertragen eines Zertifikats auf ein Gerät in einer Anlage. Des Weiteren betrifft die vorliegende Erfindung ein Computerprogrammprodukt, welches auf einer programmgesteuerten Einrichtung die Durchführung des wie oben erläuterten Verfahrens veranlasst.

In verschiedenen Anlagen, wie beispielsweise industriellen Anlagen oder auch Fahrzeugen, werden Zertifikate beispielsweise zur Authentifizierung, für die Prüfung digitaler Signaturen oder allgemein für betriebliche oder operative Prozesse verwendet.

Digitale Schlüsselzertifikate binden Angaben über die Identität des Zertifikatsinhabers an den öffentlichen Schlüssel des Zertifikatsinhabers, wobei der Zertifikatsinhaber auch ein Gerät sein kann. In diesem Fall bindet das Gerätezertifikat den Schlüssel an einen eindeutigen Parameter des Gerätes, beispielsweise eine Seriennummer oder MAC-Adresse. Gerätezertifikate werden vorzugsweise bereits in der Fertigung vom Hersteller aufgebracht, und dienen auch als Echtheitsbestätigung für das Gerät (sogenannte Herstellerzertifikate, manufacturer certificates).

Herstellerzertifikate haben üblicherweise eine sehr lange Gültigkeitsdauer (meist viele Jahre), damit das Gerät dieses Zertifikat während seines gesamten Einsatzzeitraums verwenden kann, beispielsweise als Vertrauensanker zur Anforderung oder Erstellung von weiteren Zertifikaten für den operativen Betrieb. Zudem muss auch das (Root-) Zertifikat der ausstellenden Zertifizierungsinstanz oder Zertifizierungsstelle (certification authority, CA) - sowie gegebenenfalls weitere Zwischenzertifikate - über einen entsprechend langen Zeitraum gültig sein.

Für den operativen Betrieb werden die Geräte häufig zusätzlich mit weiteren, operativen Zertifikaten ausgestattet. Die operativen Zertifikate werden üblicherweise beim Engineering (Konfigurieren) der Geräte eingespielt oder automatisch verteilt, und werden üblicherweise regelmäßig erneuert. Hierzu werden Schlüsselpaare aus einem privaten und einem öffentlichen Schlüssel verwendet, die vorzugsweise im Gerät selbst generiert werden.

Sie können auf bestimmte Verwendungszwecke wie TLS-Kommunikation, Signaturen oder Verschlüsselung angepasst sein, beispielsweise durch Auswahl anderer kryptographischer Algorithmen als beim Herstellerzertifikat. Zusätzlich oder alternativ zu den Angaben vom Hersteller können sie auch Angaben zu speziellen Aufgaben des Gerätes in der Anlage enthalten, beispielsweise "Router 123", "Bahnhof München, Weiche 17", "Heating Controller Room 123", etc.

Da die zu operativen Zertifikaten gehörenden privaten Schlüssel stärker genutzt werden - und eventuell auch kryptographisch schwächer sind -, haben operative Zertifikate üblicherweise eine deutlich geringe Gültigkeitsdauer als Herstellerzertifikate. Sie müssen daher leichter ersetzt werden können.

Zur Erstellung von operativen Zertifikaten wird im Gerät ein Schlüsselpaar erzeugt und der öffentliche Schlüssel wird - meist in Form einer Zertifikatsanfrage (certificate signing request (CSR)) - ausgelesen. Diese CSR muss nun authentisch und integritätsgeschützt zur Zertifizierungsinstanz (CA) transportiert werden. Hierzu kann die CSR mit dem privaten Schlüssel eines bereits vorhandenen Zertifikats des Gerätes (beim Bootstrapping das Herstellerzertifikat, beim Zertifikatsupdate entweder auch das Herstellerzertifikat oder ein vorhandenes operatives Zertifikat) im Gerät schon zusätzlich signiert werden. Weitere Signaturen durch einen Techniker-Laptop, eine lokale Registrierungsstelle (registration authority (RA)), und ähnliche können für den Transportschutz hinzukommen. Ein besonderer Schutz des operativen Zertifikats auf dem Weg von der CA zurück zum Gerät ist im Allgemeinen nicht notwendig, da dieses nicht vertraulich ist und Authentizität sowie Integrität durch die im Zertifikat enthaltene Signatur der CA gewährleistet ist.

Ist die Anlage kommunikationstechnisch dauerhaft oder zumindest sporadisch mit der RA des Betreibers verbunden, so kann die Abfrage der CSRs und das Einspielen des neuen operativen Zertifikats automatisch oder über Fernzugriff durchgeführt werde. Andernfalls sind mehrere Besuche eines Service-Technikers in der Anlage erforderlich, zunächst um die CSR abzufragen und anschließend, nachdem ein Zertifikat von der CA angefordert und empfangen wurde, ein weiterer Besuch, um das Zertifikat auf das Gerät zu übertragen.

Aus der Druckschrift US 2005/0071630 A1 ist ein Zertifikatmanager bekannt, mit dem Zertifikate angefragt und übertragen werden können. Er ermöglicht, digitale Zertifikate zu erneuern. Dazu werden entsprechende Anfragen nach Bedarf erzeugt und korrespondierende Zertifikate über eingerichtete Verbindungen übertragen.

Vor diesem Hintergrund besteht eine Aufgabe der vorliegenden Erfindung darin, eine Möglichkeit bereitzustellen, auch bei Anlagen ohne Kommunikationsverbindung zu einer Registrierungsstelle oder Zertifizierungsstelle die Anzahl der Besuche der Anlage durch einen Service-Techniker pro Zertifikatsaktualisierung zu reduzieren.

Erfindungsgemäß wird diese Aufgabe durch eine Computervorrichtung nach Anspruch 1 und ein Verfahren nach Anspruch 12 gelöst.

Demgemäß wird eine Computervorrichtung zum Übertragen eines Zertifikats auf ein Gerät in einer Anlage vorgeschlagen. Die Computervorrichtung weist eine Kopplungseinheit zum Aufbauen und Trennen einer Verbindung zwischen der Computervorrichtung und dem Gerät, eine Verarbeitungseinheit zum Übertragen eines Zertifikats auf das Gerät über die aufgebaute Verbindung, wobei das Zertifikat für einen ersten Zeitraum gültig ist und von einer Zertifizierungsstelle basierend auf einer Zertifikatsanfrage ausgestellt ist, und eine Empfangseinheit zum Empfangen einer weiteren Zertifikatsanfrage von dem Gerät über die aufgebaute Verbindung auf, wobei die weitere Zertifikatsanfrage dazu eingerichtet ist, ein Zertifikat für einen zweiten Zeitraum anzufordern, und wobei die Kopplungseinheit dazu eingerichtet ist, die Verbindung nach dem Übertragen des Zertifikats und dem Empfangen der weiteren Zertifikatsanfrage zu trennen.

Die jeweilige Einheit, zum Beispiel Verarbeitungseinheit oder Kopplungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Unter einer Anlage kann vorliegend insbesondere eine industrielle Anlage, eine Anlage zur Gebäudeautomatisierung oder dezentralen Energieerzeugung, eine Anlage im Heimbereich ("intelligente Küche", Fernsehgerät, etc.), eine einzelne Maschine (Geldautomat, etc.) oder ein Fahrzeug, wie beispielsweise ein Flugzeug, Schienenfahrzeug, Schiff, oder Kraftfahrzeug, verstanden werden.

Die Kopplungseinheit kann die Verbindung zwischen der Computervorrichtung und dem Gerät als kabellose oder kabelgebundene Kommunikationsverbindung aufbauen. Während der bestehenden Verbindung hat die Computervorrichtung keine Verbindung zu der Zertifizierungsstelle. Erst nach dem Trennen der Verbindung zu dem Gerät kann eine Verbindung zwischen der Computervorrichtung und der Zertifizierungsstelle aufgebaut werden. Somit kann erreicht werden, dass das Gerät und damit die Anlage von einem öffentlichen Netz abgekoppelt bleiben. Die Sicherheit der Anlage kann dadurch erhöht werden.

Die Computervorrichtung kann sich mit der Zertifizierungsstelle über eine lokale Registrierungsstelle (registration authority, RA) verbinden, oder direkt an eine zentrale Zertifizierungsstelle (certification authority, CA) verbinden. Die Zertifizierungsstelle kann, basierend auf einer Zertifikatsanfrage von dem Gerät, ein neues Zertifikat ausstellen.

Die Verarbeitungseinheit kann nach Aufbau der Verbindung ein Zertifikat, das für einen ersten Zeitraum gültig ist, auf das Gerät übertragen. Gleichzeitig kann die Verarbeitungseinheit eine Zertifikatsanfrage für ein neues Zertifikat für einen zweiten Zeitraum, d.h. ein nächstes Zertifikat, empfangen.

Durch die vorgeschlagene Computervorrichtung ist es somit möglich, neue Zertifikate auf ein Gerät in einer Anlage zu übertragen, wobei die Anlage selbst keine direkte Verbindung zu einer Zertifizierungsstelle hat.

Um die Anzahl von Wartungen, d.h. die Anzahl von Besuchen des Geräts durch einen Service-Techniker zu reduzieren, ist es mit der vorgeschlagenen Computervorrichtung möglich, in einer Sitzung sowohl ein neues Zertifikat auf das Gerät zu übertragen als auch eine Zertifikatsanfrage für ein weiteres, zukünftiges Zertifikat zu empfangen. In einer nächsten Sitzung, die nachfolgend stattfindet, kann dann wiederum ein neues Zertifikat auf das Gerät übertragen werden, das basierend auf der vorhergehenden Zertifikatsanfrage durch die Computervorrichtung bei der Zertifizierungsstelle abgeholt wurde, und wiederum eine neue Zertifikatsanfrage für ein weiteres Zertifikat empfangen werden.

Somit ist lediglich einmal eine Verbindung zwischen Gerät und Computervorrichtung erforderlich, um ein neues Zertifikat auf das Gerät zu übertragen.

Gemäß einer Ausführungsform liegt der erste Zeitraum zeitlich vor dem zweiten Zeitraum.

Beim Übertragen des Zertifikats für den ersten Zeitraum wird somit gleichzeitig eine Zertifikatsanfrage für den zweiten, nachfolgenden Zeitraum empfangen.

Gemäß einer weiteren Ausführungsform enthält die weitere Zertifikatsanfrage einen neuen öffentlichen Schlüssel des Geräts.

In der Zertifizierungsstelle wird ein neues Zertifikat unter Verwendung des übertragenen öffentlichen Schlüssels ausgestellt. Das Gerät prüft bei Empfang eines neuen Zertifikats, ob dieses für den korrekten eigenen öffentlichen Schlüssel erstellt wurde. Der private Schlüssel verlässt nicht das Gerät. Auf diese Weise kann der private Schlüssel nicht kompromittiert werden, da er von dem Gerät nicht herausgegeben wird.

Es kann für jede Zertifikatsanfrage ein neues Schlüsselpaar aus einem privaten und einem öffentlichen Schlüssel erzeugt werden. Auf diese Weise erhält der private Schlüssel nur eine beschränkte Gültigkeit und muss daher nur geringere Sicherheitsanforderungen erfüllen.

Gemäß einer weiteren Ausführungsform ist das Zertifikat ein operatives Zertifikat.

Für den operativen Betrieb kann das Gerät mit weiteren, operativen Zertifikaten ausgestattet werden. Das operative Zertifikat kann zur Gerät-zu-Gerät-Authentifizierung, zur Gerät-zu-User-Authentifizierung, als anlagenspezifische Authentifizierung und/oder für die Prüfung digitaler Signaturen, beispielsweise in operativen oder betrieblichen Prozessen, verwendet werden.

Gemäß einer weiteren Ausführungsform ist die Verarbeitungseinheit dazu eingerichtet, vor dem Aufbau einer Verbindung zwischen der Computervorrichtung und dem Gerät, die Zertifikatsanfrage an die Zertifizierungsstelle zu übermitteln und das Zertifikat von der Zertifizierungsstelle zu empfangen.

Bevor das Zertifikat an das Gerät übertragen werden kann, wird zunächst ein Zertifikat von der Zertifizierungsstelle angefragt und empfangen. Dies geschieht durch die Computervorrichtung vor einer Verbindung mit dem Gerät. Die Computervorrichtung ist somit nicht gleichzeitig mit der Zertifizierungsstelle und dem Gerät verbunden.

Die Verarbeitungseinheit ist dazu eingerichtet, nach dem Trennen der Verbindung zwischen der Computervorrichtung und dem Gerät die weitere Zertifikatsanfrage an die Zertifizierungsstelle zu übermitteln und ein weiteres Zertifikat für den zweiten Zeitraum von der Zertifizierungsstelle zu empfangen.

Das Anfordern eines weiteren Zertifikats kann direkt im zeitlichen Anschluss an das Empfangen der Zertifikatsanfrage erfolgen. In diesem Fall wird das weitere, neue Zertifikat gespeichert, bis es von dem Gerät benötigt und von der Verarbeitungseinheit der Computervorrichtung an das Gerät übertragen wird.

Alternativ kann die Zertifikatsanfrage gespeichert werden, bis das weitere Zertifikat von dem Gerät benötigt wird. In diesem Fall wird zu einem späteren Zeitpunkt das weitere Zertifikat von der Zertifizierungsstelle angefordert und anschließend von der Verarbeitungseinheit der Computervorrichtung an das Gerät übertragen.

Die Verarbeitungseinheit ist ferner dazu eingerichtet, nach einem Aufbau einer weiteren Verbindung zwischen der Computervorrichtung und dem Gerät, das weitere Zertifikat für den zweiten Zeitraum auf das Gerät über die aufgebaute weitere Verbindung zu übertragen.

Dies erfolgt, nachdem das weitere Zertifikat von der Zertifizierungsstelle empfangen wurde.

Statt nur einer Zertifikatsanfrage kann die Empfangseinheit auch mehrere Zertifikatsanfragen auf einmal empfangen. Diese können dann für mehrere Zertifikatsaktualisierungen zum Anfragen mehrerer neuer Zertifikate verwendet werden.

Gemäß einer weiteren Ausführungsform hat jedes Zertifikat eine festgelegte Laufzeit.

Ein Zertifikat kann beispielsweise eine Laufzeit von mindestens einem Service-Intervall haben. Bevorzugt wird das Zertifikat erst kurz vor dem nächsten Besuch eines Service-Technikers und damit einer erneuten Verbindung der Computervorrichtung mit dem Gerät erzeugt, um bei einem Kompromittieren des Geräts, der Computervorrichtung und/oder der Zertifizierungsstelle die neuen Zertifikate nicht widerrufen zu müssen.

Gemäß einer weiteren Ausführungsform ist die Empfangseinheit dazu eingerichtet, eine Bestätigung über den Erhalt des Zertifikats von dem Gerät zu empfangen.

Beim Einspielen eines Zertifikats kann das Gerät eine Bestätigung (Certificate Confirmation Content) erzeugen, mit der es den Erhalt des Zertifikats gegenüber der Zertifizierungsstelle bestätigt. Eine solche Benachrichtigung der Zertifizierungsstelle ist policy-abhängig, z.B. Bereitstellung des Zertifikats in einem Repository nach Erhalt der Bestätigung, oder Widerruf des Zertifikats nach Ablauf einer gewissen Zeit ohne Erhalt der Bestätigung. Die Bestätigung kann von der Computervorrichtung zusammen mit der Zertifikatsanfrage für das nächste Zertifikat empfangen und anschließend an die Zertifizierungsstelle übertragen werden.

Diese Bestätigung kann vor allem auch beim Bootstrapping und zur Aktualisierung von Verschlüsselungs-Zertifikaten, die verschlüsselt ausgeliefert werden, verwendet werden. Zum Nachweis des privaten Schlüssels muss das Gerät sein Zertifikat entschlüsseln. Zusätzlich kann optional der Erhalt der Bestätigung durch die Zertifizierungsstelle gegenüber dem Gerät mit einer "Bestätigung der Bestätigung" (PKI Confirmation Content) ebenfalls bestätigt werden. Dies kann ebenfalls policy-abhängig erfolgen. Beispielsweise kann das Gerät bei Ausbleiben dieser "Bestätigung der Bestätigung" eine erneute Beantragung eines Zertifikats beginnen, da es annimmt, dass seine Bestätigung nicht in der Zertifizierungsstelle angekommen ist und sein Zertifikat deswegen nicht verwendet werden kann. Die Übertragung dieser "Bestätigung der Bestätigung" kann in einer separaten zusätzlichen Verbindung der Computervorrichtung mit dem Gerät auf das Gerät übertragen werden.

Gemäß einer weiteren Ausführungsform ist die Kopplungseinheit dazu eingerichtet, die Verbindung als zeitlich begrenzte Verbindung aufzubauen.

Das bedeutet, dass die Computervorrichtung keine dauerhafte Kommunikationsverbindung mit dem Gerät besitzt.

Gemäß einem weiteren Aspekt wird ein System zum Übertragen eines Zertifikats auf ein Gerät in einer Anlage vorgeschlagen. Das System weist zumindest ein Gerät und eine wie oben beschriebene Computervorrichtung auf, welche dazu eingerichtet ist, mit dem Gerät zu kommunizieren.

Die Computervorrichtung kann hierbei mit einem oder mit mehreren Geräten kommunizieren. Dies kann entweder über ein systemeigenes Netzwerk durchgeführt werden, wobei die Computervorrichtung mit mehreren Geräten gleichzeitig kommunizieren kann, oder über eine bidirektionale direkte Kopplung zwischen der Computervorrichtung und den Geräten.

Gemäß einer Ausführungsform hat das Gerät keine direkte Kommunikationsverbindung mit einer Zertifizierungsstelle.

Die Kommunikation des Geräts mit der Zertifizierungsstelle zum Erhalten eines Zertifikats erfolgt lediglich indirekt über die Computervorrichtung.

Gemäß einer weiteren Ausführungsform weist das System eine zentrale Datenbank zum Speichern der Zertifikatsanfrage auf.

Wird die Zertifizierungsstelle, welche die Zertifikate erstellt hat, kompromittiert, so kann den Zertifikatsanfragen und den sie begleitenden Zertifikaten nur dann weiterhin vertraut werden, wenn sichergestellt werden kann, dass die Kompromittierung nach der letzten Verbindung zwischen der Computervorrichtung und dem Gerät und damit der Abfrage der Zertifikatsanfrage stattgefunden hat, und die abgelegten Zertifikatsanfragen und die sie begleitenden Zertifikate in der Zwischenzeit nicht manipuliert wurden. Es können dann einfach neue Zertifikate von einer Ersatz-Zertifizierungsstelle erstellt und neu verteilt werden. Zum Sichern der Zertifikatsanfragen kann beispielsweise eine zentrale Datenbank verwendet werden, die nicht mit der Zertifizierungsstelle verbunden ist. Die zentrale Datenbank kann dabei durch geeignete Sicherheitsvorkehrungen vor Angriffen geschützt werden.

Gemäß einem weiteren Aspekt wird ein Verfahren zum Übertragen eines Zertifikats auf ein Gerät in einer Anlage vorgeschlagen. Das Verfahren weist die folgenden Schritte auf: Aufbauen einer Verbindung zwischen einer Computervorrichtung und dem Gerät, Übertragen eines Zertifikats auf das Gerät über die aufgebaute Verbindung, wobei das Zertifikat für einen ersten Zeitraum gültig ist und von einer Zertifizierungsstelle basierend auf einer Zertifikatsanfrage ausgestellt ist, Empfangen einer weiteren Zertifikatsanfrage von dem Gerät über die aufgebaute Verbindung, wobei die weitere Zertifikatsanfrage dazu eingerichtet ist, ein Zertifikat für einen zweiten Zeitraum anzufordern, und Trennen der Verbindung nach dem Übertragen des Zertifikats und dem Empfangen der weiteren Zertifikatsanfrage, wobei der erste Zeitraum zeitlich vor dem zweiten Zeitraum liegt.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Computervorrichtung beschriebenen Ausführungsformen und Merkmale gelten für das vorgeschlagene System sowie das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Systems zum Übertragen eines Zertifikats auf ein Gerät in einer Anlage;
- Fig. 2: zeigt ein schematisches Ablaufdiagramm eines Verfahrens zum initialen Übertragen eines Zertifikats auf ein Gerät in einer Anlage; und
- Fig. 3: zeigt ein schematisches Ablaufdiagramm eines Verfahrens zum Übertragen eines Zertifikats auf ein Gerät in einer Anlage.

In den Figuren sind gleiche oder funktionsgleiche Elemente mit denselben Bezugszeichen versehen worden, sofern nichts anderes angegeben ist.

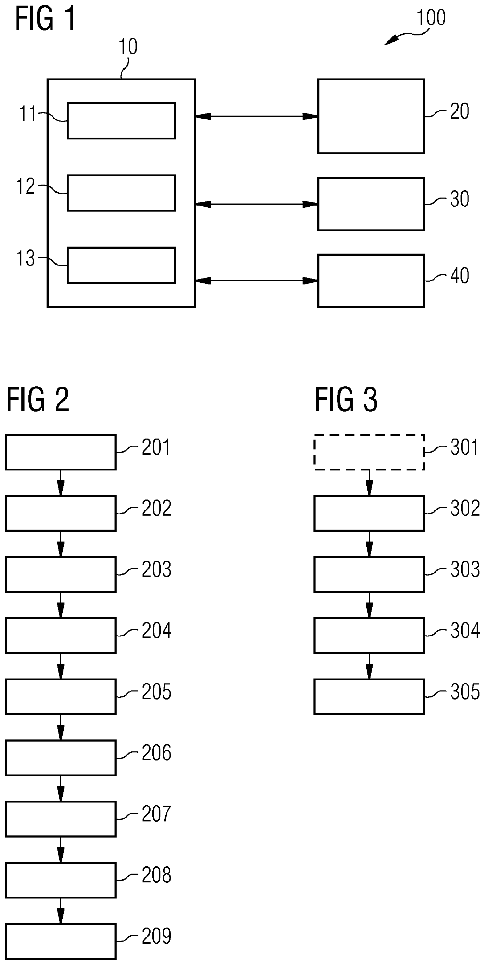

Fig. 1 zeigt ein System 100 mit einer Computervorrichtung 10, einem Gerät 20, einer Zertifizierungsstelle 30 sowie einer zentralen Datenbank 40. Die Datenbank 40 ist optional. Obwohl nur ein Gerät 20 gezeigt ist, kann eine Mehrzahl von Geräten 20 vorhanden sein, die alle Teil einer Anlage, beispielsweise einer industriellen Anlage oder eines Fahrzeugs sind.

Die Computervorrichtung 10 dient dazu, ein Zertifikat auf das Gerät 20 zu übertragen, ohne dass das Gerät 20 eine direkte Verbindung zu der Zertifizierungsstelle 30 benötigt. Hierzu weist die Computervorrichtung 10 eine Kopplungseinheit 11, eine Verarbeitungseinheit 12 und eine Empfangseinheit 13 auf.

Die Computervorrichtung 10 kann vor einer Kommunikation mit dem Gerät 20 zum Übertragen eines Zertifikats zunächst mit der Zertifizierungsstelle 30 kommunizieren, um von dieser ein Zertifikat für das Gerät 20 zu erhalten. Das Zertifikat, das für einen ersten Zeitraum gültig ist, wird auf Grundlage einer Zertifikatsanfrage von dem Gerät 20 erstellt, die davor bereits an die Computervorrichtung 10 übertragen wurde.

Um nun eine Kommunikation mit dem Gerät 20 durchzuführen, um das Zertifikat zu übertragen, baut die Kopplungseinheit 11 eine Verbindung zwischen der Computervorrichtung 10 und dem Gerät 20 auf. Die Verarbeitungseinheit 12 überträgt dann das Zertifikat auf das Gerät 20 über die aufgebaute Verbindung.

Über die Empfangseinheit 13 empfängt die Computervorrichtung 10 eine weitere Zertifikatsanfrage von dem Gerät 20. Die weitere Zertifikatsanfrage dient dazu, von der Zertifizierungsstelle 30 ein Zertifikat für einen zweiten Zeitraum anzufordern.

Anschließend trennt die Kopplungseinheit 11 die Verbindung zwischen der Computervorrichtung 10 und dem Gerät 20.

Fig. 2 zeigt ein Ablaufdiagramm eines Verfahrens, um initial ein Zertifikat auf das Gerät 20 zu übertragen. Das bedeutet, dass der Computervorrichtung 10 zunächst keine Zertifikatsanfrage des Geräts 20 vorliegt.

In Schritt 201 wird eine Verbindung zwischen der Computervorrichtung 10 und dem Gerät 20 aufgebaut.

In Schritt 202 wird zunächst eine Anfangskonfiguration durch die Computervorrichtung 10 auf das Gerät 20 übertragen und von dem Gerät 20 in Schritt 203 eine Zertifikatsanfrage empfangen.

In Schritt 204 wird die Verbindung zunächst wieder getrennt.

Anschließend wird in Schritt 205, ohne eine Verbindung zwischen der Computervorrichtung 10 und dem Gerät 20, die Zertifikatsanfrage an eine Zertifizierungsstelle 30 übertragen und ein Zertifikat empfangen.

In Schritt 206 wird erneut eine Verbindung zwischen der Computervorrichtung 10 und dem Gerät 20 aufgebaut.

In Schritt 207 wird dieses Zertifikat dann von der Computervorrichtung 10 an das Gerät 20 übertragen. Zusätzlich wird dann in Schritt 208 eine neue Zertifikatsanfrage von dem Gerät 20 empfangen. Diese dient dazu, ein neues Zertifikat für einen nachfolgenden Zeitraum anzufordern.

Zum Schluss wird die Verbindung in Schritt 209 wieder getrennt.

In Fig. 3 ist ein Ablaufdiagramm eines Verfahrens zum Übertragen des Zertifikats auf das Gerät 20 gezeigt, wobei diese Übertragung während Wartungsarbeiten des Geräts 20 erfolgen kann.

In Schritt 301, der hier als optional gezeigt ist, wird zunächst ein Zertifikat von der Zertifizierungsstelle mittels einer bereits vorhandenen Zertifikatsanfrage angefordert.

In Schritt 302 wird eine Verbindung zwischen der Computervorrichtung 10 und dem Gerät 20 aufgebaut.

In Schritt 303 wird dann das Zertifikat auf das Gerät 20 über die aufgebaute Verbindung übertragen.

Anschließend wird in Schritt 304 eine weitere Zertifikatsanfrage von dem Gerät 20 über die aufgebaute Verbindung empfangen.

Nach dem Übertragen des Zertifikats und dem Empfangen der Zertifikatsanfrage wird die Verbindung in Schritt 305 getrennt.

Das Verfahren von Fig. 3 kann in regelmäßigen Abständen wiederholt werden, um das Gerät 20 mit jeweils aktuellen Zertifikaten auszustatten. Hierzu ist für jede Aktualisierung nur ein Vor-Ort-Besuch eines Technikers mit der Computervorrichtung 10 erforderlich, bei dem sowohl ein neues Zertifikat aufgespielt als auch eine Zertifikatsanfrage für ein nachfolgendes Zertifikat abgeholt werden.

Obwohl die vorliegende Erfindung anhand von Ausführungsbeispielen beschrieben wurde, ist sie vielfältig modifizierbar.

## Patentansprüche

1. Computervorrichtung (10) zum Übertragen eines Zertifikats auf ein Gerät (20) in einer Anlage, mit:
einer Kopplungseinheit (11) zum Aufbauen und Trennen einer Verbindung zwischen der Computervorrichtung (10) und dem Gerät (20),
einer Verarbeitungseinheit (12) zum Übertragen eines Zertifikats auf das Gerät (20) über die aufgebaute Verbindung, wobei das Zertifikat für einen ersten Zeitraum gültig ist und von einer Zertifizierungsstelle basierend auf einer Zertifikatsanfrage ausgestellt ist, und
einer Empfangseinheit (13) zum Empfangen einer weiteren Zertifikatsanfrage von dem Gerät (20) über die aufgebaute Verbindung, wobei die weitere Zertifikatsanfrage dazu eingerichtet ist, ein Zertifikat für einen zweiten Zeitraum anzufordern,
wobei die Kopplungseinheit (11) dazu eingerichtet ist, die Verbindung nach dem Übertragen des Zertifikats und dem Empfangen der weiteren Zertifikatsanfrage zu trennen,
wobei die Verarbeitungseinheit (12) dazu eingerichtet ist, nach dem Trennen der Verbindung zwischen der Computervorrichtung (10) und dem Gerät (20) die weitere Zertifikatsanfrage an die Zertifizierungsstelle zu übermitteln und ein weiteres Zertifikat für den zweiten Zeitraum von der Zertifizierungsstelle zu empfangen und
die Verarbeitungseinheit (12) dazu eingerichtet ist, nach einem Aufbau einer weiteren Verbindung zwischen der Computervorrichtung (10) und dem Gerät (20) das weitere Zertifikat für den zweiten Zeitraum auf das Gerät (20) über die aufgebaute weitere Verbindung zu übertragen.

2. Computervorrichtung nach Anspruch 1,
**dadurch gekennzeichnet, dass** der erste Zeitraum zeitlich vor dem zweiten Zeitraum liegt.

3. Computervorrichtung nach Anspruch 1 oder 2,
**dadurch gekennzeichnet, dass** die weitere Zertifikatsanfrage einen öffentlichen Schlüssel des Geräts (20) enthält.

4. Computervorrichtung nach einem der Ansprüche 1 - 3,
**dadurch gekennzeichnet, dass** das Zertifikat ein operatives Zertifikat ist.

5. Computervorrichtung nach einem der Ansprüche 1 - 4,
**dadurch gekennzeichnet, dass** die Verarbeitungseinheit (12) dazu eingerichtet ist, vor dem Aufbau einer Verbindung zwischen der Computervorrichtung (10) und dem Gerät (20) die Zertifikatsanfrage an die Zertifizierungsstelle zu übermitteln und das Zertifikat von der Zertifizierungsstelle zu empfangen.

6. Computervorrichtung nach einem der Ansprüche 1 - 5,
**dadurch gekennzeichnet, dass** jedes Zertifikat eine festgelegte Laufzeit hat.

7. Computervorrichtung nach einem der Ansprüche 1 - 6,
**dadurch gekennzeichnet, dass** die Empfangseinheit (13) dazu eingerichtet ist, eine Bestätigung über den Erhalt des Zertifikats von dem Gerät (20) zu empfangen.

8. Computervorrichtung nach einem der Ansprüche 1 - 7,
**dadurch gekennzeichnet, dass** die Kopplungseinheit (11) dazu eingerichtet ist, die Verbindung als zeitlich begrenzte Verbindung aufzubauen.

9. System (100) zum Übertragen eines Zertifikats auf ein Gerät (20) in einer Anlage, mit:
zumindest einem Gerät (20) und
einer Computervorrichtung (10) nach einem der Ansprüche 1 - 8, welche dazu eingerichtet ist, mit dem Gerät (20) zu kommunizieren.

10. System nach Anspruch 9,
**dadurch gekennzeichnet, dass** das Gerät (20) keine direkte Kommunikationsverbindung mit einer Zertifizierungsstelle hat.

11. System nach Anspruch 9 oder 10, **gekennzeichnet durch** eine zentrale Datenbank (40) zum Speichern der Zertifikatsanfrage.

12. Verfahren zum Übertragen eines Zertifikats auf ein Gerät (20) in einer Anlage, mit:
Aufbauen (302) einer Verbindung zwischen einer Computervorrichtung (10) und dem Gerät (20),
Übertragen (303) eines Zertifikats auf das Gerät (20) über die aufgebaute Verbindung, wobei das Zertifikat für einen ersten Zeitraum gültig ist und von einer Zertifizierungsstelle basierend auf einer Zertifikatsanfrage ausgestellt ist, und
Empfangen (304) einer weiteren Zertifikatsanfrage von dem Gerät (20) über die aufgebaute Verbindung, wobei die weitere Zertifikatsanfrage dazu eingerichtet ist, ein Zertifikat für einen zweiten Zeitraum anzufordern, und
Trennen (305) der Verbindung nach dem Übertragen des Zertifikats und dem Empfangen der weiteren Zertifikatsanfrage,
wobei der erste Zeitraum zeitlich vor dem zweiten Zeitraum liegt und
wobei nach dem Trennen der Verbindung zwischen der Computervorrichtung (10) und dem Gerät (20) die weitere Zertifikatsanfrage an die Zertifizierungsstelle übermittelt und ein weiteres Zertifikat für den zweiten Zeitraum von der Zertifizierungsstelle empfangen wird und
nach einem Aufbau einer weiteren Verbindung zwischen der Computervorrichtung (10) und dem Gerät (20) das weitere Zertifikat für den zweiten Zeitraum auf das Gerät (20) über die aufgebaute weitere Verbindung übertragen wird.

13. Computerprogrammprodukt, welches auf einer programmgesteuerten Einrichtung die Durchführung des Verfahrens nach Anspruch 12 veranlasst.

## Claims

1. Computer apparatus (10) for transmitting a certificate to a device (20) in an installation, comprising:
a coupling unit (11) for establishing and breaking a connection between the computer apparatus (10) and the device (20),
a processing unit (12) for transmitting a certificate to the device (20) by means of the established connection, wherein the certificate is valid for a first time period and is issued by a certification authority based on a certificate request, and
a receiving unit (13) for receiving a further certificate request from the device (20) by means of the established connection, wherein the further certificate request is designed to request a certificate for a second time period,
wherein the coupling unit (11) is designed to break the connection after the certificate is transmitted and the further certificate request is received,
wherein the processing unit (12) is designed to transmit the further certificate request to the certification authority and to receive a further certificate for the second time period from the certification authority after the connection between the computer apparatus (10) and the device (20) is broken
and the processing unit (12) is designed to transmit the further certificate for the second time period to the device (20) by means of the established further connection after a further connection between the computer apparatus (10) and the device (20) is established.

2. Computer apparatus according to Claim 1,
**characterized in that** the first time period precedes the second time period.

3. Computer apparatus according to Claim 1 or 2,
**characterized in that** the further certificate request contains a public key of the device (20).

4. Computer apparatus according to one of Claims 1-3,
**characterized in that** the certificate is an operative certificate.

5. Computer apparatus according to one of Claims 1-4,
**characterized in that** the processing unit (12) is designed to transmit the certificate request to the certification authority and to receive the certificate from the certification authority before a connection between the computer apparatus (10) and the device (20) is established.

6. Computer apparatus according to one of Claims 1-5,
**characterized in that** each certificate has a defined run time.

7. Computer apparatus according to one of Claims 1-6,
**characterized in that** the receiving unit (13) is designed to receive a confirmation about the receipt of the certificate from the device (20).

8. Computer apparatus according to one of Claims 1-7, **characterized in that** the coupling unit (11) is designed to establish the connection as a time-limited connection.

9. System (100) for transmitting a certificate to a device (20) in an installation, comprising:
at least one device (20) and
one computer apparatus (10) according to one of Claims 1-8 which is designed to communicate with the device (20).

10. System according to Claim 9,
**characterized in that** the device (20) does not have a direct communication connection to a certification authority.

11. System according to Claim 9 or 10,
**characterized by** a central database (40) for storing the certificate request.

12. Method for transmitting a certificate to a device (20) in an installation, comprising:
establishing (302) a connection between a computer apparatus (10) and the device (20),
transmitting (303) a certificate to the device (20) by means of the established connection, wherein the certificate is valid for a first time period and is issued by a certification authority based on a certificate request, and
receiving (304) a further certificate request from the device (20) by means of the established connection, wherein the further certificate request is designed to request a certificate for a second time period, and
breaking (305) the connection after the certificate is transmitted and the further certificate request is received,
wherein the first time period precedes the second time period and
wherein the further certificate request is transmitted to the certification authority and a further certificate for the second time period is received from the certification authority after the connection between the computer apparatus (10) and the device (20) is broken and
the further certificate for the second time period is transmitted to the device (20) by means of the established further connection after a further connection between the computer apparatus (10) and the device (20) is established.

13. Computer program product which arranges for the method according to Claim 12 to be carried out on a program-controlled device.

## Revendications

1. Dispositif informatique (10) pour transmettre un certificat à un appareil (20) dans une installation, comportant :
une unité de couplage (11) pour établir et couper une liaison entre le dispositif informatique (10) et l'appareil (20),
une unité de traitement (12) pour transmettre un certificat à l'appareil (20) via la liaison établie, le certificat étant valable pour une première période et étant établi par une instance de certification sur la base d'une demande de certificat, et
une unité de réception (13) pour recevoir une autre demande de certificat de l'appareil (20) via la liaison établie, l'autre demande de certificat étant conçue pour demander un certificat pour une deuxième période,
l'unité de couplage (11) étant conçue pour couper la liaison après la transmission du certificat et la réception de l'autre demande de certificat,
l'unité de traitement (12) étant conçue pour transmettre l'autre demande de certificat à l'instance de certification après la coupure de la liaison entre le dispositif informatique (10) et l'appareil (20) et recevoir de l'instance de certification un autre certificat pour la deuxième période, et
l'unité de traitement (12) étant conçue pour transmettre, après l'établissement d'une autre liaison entre le dispositif informatique (10) et l'appareil (20), l'autre certificat pour la deuxième période à l'appareil (20) via l'autre liaison établie.

2. Dispositif informatique selon la revendication 1, **caractérisé en ce que** la première période est située avant la deuxième période dans le temps.

3. Dispositif informatique selon la revendication 1 ou 2, **caractérisé en ce que** l'autre demande de certificat contient une clé publique de l'appareil (20).

4. Dispositif informatique selon l'une des revendications 1 - 3, **caractérisé en ce que** le certificat est un certificat opérationnel.

5. Dispositif informatique selon l'une des revendications 1 - 4, **caractérisé en ce que** l'unité de traitement (12) est conçue pour, avant l'établissement d'une liaison entre le dispositif informatique (10) et l'appareil (20), transmettre la demande de certificat à l'instance de certification et recevoir le certificat de l'instance de certification.

6. Dispositif informatique selon l'une des revendications 1 - 5, **caractérisé en ce que** chaque certificat a une durée déterminée.

7. Dispositif informatique selon l'une des revendications 1 - 6, **caractérisé en ce que** l'unité de réception (13) est conçue pour recevoir de l'appareil (20) une confirmation de la réception du certificat.

8. Dispositif informatique selon l'une des revendications 1 - 7, **caractérisé en ce que** l'unité de couplage (11) est conçue pour établir la liaison en tant que liaison limitée dans le temps.

9. Système (100) de transmission d'un certificat à un appareil (20) dans une installation, comportant :
au moins l'appareil (20) et
un dispositif informatique (10) selon l'une des revendications 1 - 8, lequel est conçu pour communiquer avec l'appareil (20).

10. Système selon la revendication 9, **caractérisé en ce que** l'appareil (20) n'a pas de liaison de communication directe avec une instance de certification.

11. Système selon la revendication 9 ou 10, **caractérisé par** une base de données centrale (40) pour sauvegarder la demande de certificat.

12. Procédé de transmission d'un certificat à un appareil (20) dans une installation, comportant :
l'établissement (302) d'une liaison entre un dispositif informatique (10) et l'appareil (20),
la transmission (303) d'un certificat à l'appareil (20) via la liaison établie, le certificat étant valable pour une première période et étant établi par une instance de certification sur la base d'une demande de certificat, et
la réception (304) d'une autre demande de certificat de l'appareil (20) via la liaison établie, l'autre demande de certificat étant conçue pour demander un certificat pour une deuxième période, et
la coupure (305) de la liaison après la transmission du certificat et la réception de l'autre demande de certificat, la première période est située avant la deuxième période dans le temps et,
après la coupure de la liaison entre le dispositif informatique (10) et l'appareil (20), l'autre demande de certificat étant transmise à l'instance de certification et un autre certificat pour la deuxième période étant reçu de l'instance de certification et, après un établissement d'une autre liaison entre le dispositif informatique (10) et l'appareil (20), l'autre certificat pour la deuxième période étant transmis à l'appareil (20) via l'autre liaison établie.

13. Produit de programme informatique qui fait exécuter le procédé selon la revendication 12 sur un dispositif commandé par programme.
